# EUROPEAN PATENT SPECIFICATION

(11) **EP 2 700 974 B1**
(45) Date of publication and mention of the grant of the patent: **18.03.2020**
(21) Application number: 12774259.1
(22) Date of filing: 13.04.2012
(51) Int. Cl.: G01S 5/02, G01S 19/01, H04L 29/06

(54) **METHOD FOR RECOGNIZING THE LOCATIONS OF ELECTRIC APPLIANCES**
VERFAHREN ZUR ERKENNUNG DER STANDORTE VON ELEKTROGERÄTEN
PROCÉDÉ DE RECONNAISSANCE D'EMPLACEMENTS D'APPAREILS ÉLECTRIQUES

(30) Priority: 18.04.2011 KR 20110035898
(43) Date of publication of application: 26.02.2014
(73) Proprietor: LG Electronics Inc., SEOUL, 07336 (KR)
(72) Inventor: KIM, Jongsun, Changwon-si Gyeongsangnam-do 641-711 (KR); CHOI, Byungki, Changwon-si Gyeongsangnam-do 641-711 (KR); OH, Minjin, Changwon-si Gyeongsangnam-do 641-711 (KR); JO, Seongjin, Changwon-si Gyeongsangnam-do 641-711 (KR)
(74) Representative: Ter Meer Steinmeister & Partner
(86) International application number: PCT/KR2012/002830
(87) International publication number: WO 2012/144771

(56) References cited:
- WO-A1-2008/070690
- JP-A- 11 108 685
- JP-A- 2003 016 208
- JP-A- 2005 284 611
- JP-A- 2010 033 175

## Description

### TECHNICAL FIELD

The present disclosure relates to a method of recognizing the location of an electrical appliance.

### BACKGROUND ART

In general, electrical appliances may be used in countries other than the countries where the electrical appliances are made. Moreover, the languages of users who use the electrical appliances may be different. Thus, in order for a specific country or a specific user to use the electrical appliances, the electrical appliances need to set content for the specific country or the specific user.

Typically, users have individually set content on the basis of a specific language according to the installation location of the electrical appliance or according to an exported region.
WO 2008/070690 A1 describes a device, which changes its operation dependent upon the location of the device. The device accesses parameters which are specific to its location and uses these to determine how the operation of the device should be changed.

### DISCLOSURE OF THE INVENTION

### TECHNICAL PROBLEM

The object of the present invention is to provide a method of recognizing the location of an electrical appliance that may recognize the installation location of the electrical appliance, in order to set or change content corresponding to the installation location of the electrical appliance.

### TECHNICAL SOLUTION

The object is solved by the features of the independent method claim 1. Further embodiments are set forth in the dependent claims 2-7.

### ADVANTAGEOUS EFFECTS

According to the proposed embodiments, since content corresponding to the location or region where an electrical appliance is installed may be recognized, set or changed, user convenience is enhanced.

### BRIEF DESCRIPTION OF THE DRAWINGS

Fig. 1 is a schematic diagram of a network device including an electrical appliance according to a first embodiment;
Fig. 2 is a control block diagram of an electrical appliance according to a first embodiment;
Fig. 3 is a flow chart of a method of controlling an electrical appliance according to a first embodiment;
Fig. 4 is a diagram for explaining a method of controlling an electrical appliance according to a second embodiment;
Fig. 5 is a diagram for explaining a method of controlling an electrical appliance according to a third embodiment;
Fig. 6 is a diagram for explaining a method of controlling an electrical appliance according to a fourth embodiment; and
Fig. 7 is a flow chart of a method of controlling an electrical appliance according to a fifth embodiment.

### MODE FOR CARRYING OUT THE INVENTION

Embodiments will be described below in detail with reference to the accompanying drawings.

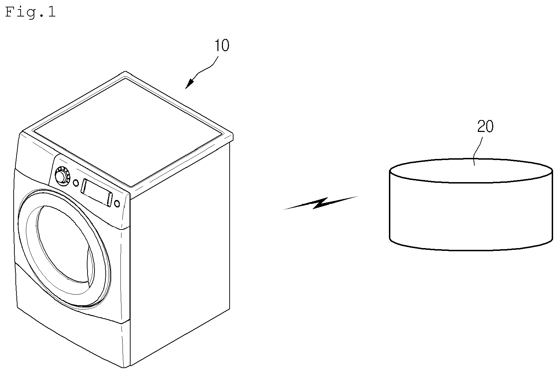

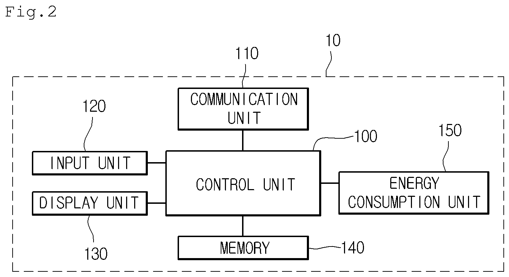

Fig. 1 is a schematic diagram of a network device including an electrical appliance according to a first embodiment and Fig. 2 is a control block diagram of an electrical appliance according to a first embodiment.

Referring to FIGS. 1 and 2, the network device according to the embodiment may include an electrical appliance 10 and one or more communication components that may communicate with the electrical appliance 10.

In particular, the electrical appliance 10 may include a control unit 100, a communication unit 110, an input unit 120 for obtaining information, a display unit 130 for displaying information, a memory (140) for storing information, and an energy consumption unit 150 for performing specific functions by consuming energy. The electrical appliance 10 may include a washing machine, a drying machine, a dish washer, a cooking device, a cleaner, a refrigerator, an air conditioner, lighting, a TV, etc. and it is clear that the electrical appliance has no limitation in the specification.

The communication component 20 may be, as an example, a web server or a server that is managed by the manufacturer or seller of the electrical appliance 10.

The electrical appliance 10 may communicate with the communication component 20 by the communication unit 110 in a wired manner or wirelessly. As an example, the electrical appliance 10 may communicate directly with the communication component 20. That is, it is possible to make direct communication without a wireless access point by using a WiFi-Direct technology or an Ad-Hoc mode (or network). In particular, the Wi-FI Direct means a technology that enables high-speed communication by using a communication protocol such as 802.11a,b,g,n irrespective of whether there is an access point. This technology recently takes center stage as a communication technology that enables the electrical appliance to be wirelessly connected to the communication component by using Wi-FI without an internet network.

The Ad-Hoc mode (or network) is a communication network that includes only a mobile host without a fixed, wired network, and since there is no constraint on the movement of the host and there is no need for a base station, it is possible to quickly build a network and cost is cheap. That is, even if there is no access point, wireless communication is possible. Thus, in the Ad-Hoc mode, even if there is no access point, the electrical appliance 10 may communicate with the communication component 20 wirelessly.

Bluetooth communication is a widely-known near field communication method and enables wireless communication within a specific range through a pairing process between a Bluetooth module connected to the electrical appliance 10 and a Bluetooth module connected to the communication component 20.

Alternatively, the electrical appliance 10 and the communication component 20 may communicate through an access point. Alternatively, the electrical appliance 10 and the communication component 20 may communicate through a wired network.

In the embodiment, it is clear that there is no limitation on the communication schemes between the electrical appliance 10 and the communication component 20.

Each of the electrical appliance 10 and the communication component 20 may have unique internet protocol (IP) information (address).

The memory 140 stores content required for performing the functions of the electrical appliance 10 (configurations of a mode or course, and control methods therefor), content implemented on the display unit 130, etc. The content implemented on the display unit 130 may include languages, time, screen configurations, icons, etc. Moreover, the memory 140 may store location dependent content or language dependent content.

When the electrical appliance 10 is initially produced, content corresponding to a specific language (as an example, a language used in the country where the electrical appliance is manufactured) may be preset. As another example, when the electrical appliance 10 is initially produced, content corresponding to a specific language may not be preset and after the electrical appliance 10 recognizes the current installation location, content may be set.

A method of controlling the electrical appliance, in particular, a method of recognizing the location of the electrical appliance will be described below.

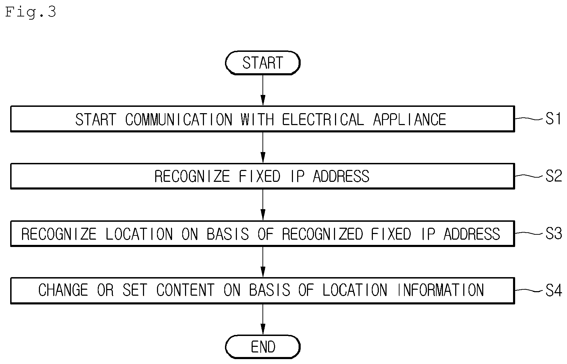

Fig. 3 is a flow chart of a method of controlling an electrical appliance according to a first embodiment.

Referring to Fig. 3, the electrical appliance 10 starts communication in step S1.

Then, the electrical appliance 10 accesses the communication component 20 and the electrical appliance 10 recognizes a fixed IP address on the access route between the electrical appliance 10 and the communication component 20 in step S2. In this case, the communication component 20 functions as an IP address information provider.

The fixed IP address may be a fixed IP address of the communication component 20 or a fixed IP address of a communication service provider on the route before the communication component 20.

As another example, the electrical appliance 10 has operating system (OS) such as Windows, Linux, etc. and may include an application program for identifying the access route between the electrical appliance 10 and the communication component 20. After executing the application program, it is possible to identify information on the access route from the electrical appliance 10 to the communication component 20 by using the command "tracert". The information on the access route may include a fixed IP address and/or a dynamic IP address. Thus, the electrical appliance 10 may recognize the first fixed IP address on the access route. The fixed IP address may be a fixed IP address of the communication service provider.

Next, after recognizing the fixed IP address, the electrical appliance 10 recognizes on the basis of the recognized fixed IP address the consumer location of the fixed IP address, in step S3. The consumer location of the fixed IP address may be provided from the communication component 20 or recognized through the application program of the electrical appliance 10.

Since the fixed IP address is assigned and managed according to a corresponding country, it is possible to identify the consumer location (such as countries, regions, etc.) if identifying the fixed IP address. A consumer location corresponding to a fixed IP address is pre-stored in the memory 140 of the electrical appliance 10 or the memory of the communication component 20.

In addition, the content of the electrical appliance 10 may be changed to content corresponding to the recognized location or the content corresponding to the recognized location may be set to the electrical appliance, in step S4. As described above, content corresponding to a location may be pre-stored in the memory 140 of the electrical appliance 10.

Content change may mean in the specification that existing content is changed to new content or removed or new content is added. In addition, setting content means that specific content is set when content is not set to the electrical appliance.

As an example, if the electrical appliance 10 is installed in Korea to be able to make communication, the consumer of the fixed IP address accessing the electrical appliance 10 is Korea. Then, the electrical appliance 10 may recognize that the current installation location is Korea, and the content of the electrical appliance 10 may be changed or set to Korean content or any content that may be used in Korea.

In this case, if content is changed, a user interface (such as a display unit or an input unit) may be changed or only the function of the user interface may be changed without changing the user interface. For example, in a case where the electrical appliance is a washing machine, a selection unit indicated as an ordinary course on the user interface may maintain the name of the ordinary course after content is changed but a powerful course may be performed if the ordinary course is selected.

In the specification, the fixed IP address may be basic information required for recognizing a location. In addition, the electrical appliance 10 may automatically recognize the basic information if communication starts or may recognize the basic information after the electrical appliance 10 starts communication (may communicate) if a user command is input.

According to the embodiment, since content corresponding to a location or a region in which the electrical appliance 10 is installed may be recognized and thus set or changed, user convenience is enhanced.

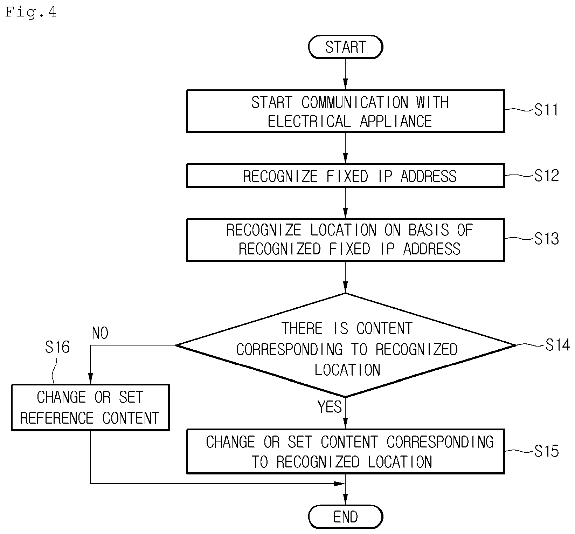

Fig. 4 is a diagram for explaining a method of controlling an electrical appliance according to a second embodiment.

The embodiment is the same as the first embodiment in most parts but has differences in how to change or set content.

Referring to Fig. 4, communication starts to recognize the location of the electrical appliance 10 in step S11. Then, the electrical appliance 10 accesses the communication component and recognizes the fixed IP address on the access route between the electrical appliance 10 and the communication component 20 in step S12. Alternatively, after executing the application program described in the first embodiment, it is possible to identify information on the access route from the electrical appliance 10 to the communication component 20 by using the command "tracert" and it is possible to recognize a fixed IP address that is located for the first time on the access route.

Next, if the fixed IP address is recognized, the electrical appliance 10 recognizes the consumer location of the fixed IP address on the basis of the recognized fixed IP address (which is basic information required for recognizing a location) in step S13. The consumer location of the fixed IP address may be provided from the communication component or recognized through the application program of the electrical appliance 10 (which is the same as that of the first embodiment).

In step S14, the electrical appliance 10 determines whether there is content corresponding to the location recognized in step S13. That is, the electrical appliance 10 determines whether content corresponding to the recognized location is stored in the memory 140 of the electrical appliance 10.

If there is content corresponding to the recognized location as a result of determination made in step S14, the content of the electrical appliance 10 is changed to content corresponding to the recognized location or content corresponding to the recognized location information is set to the electrical appliance 10, in step S15.

On the other hand, if there is no content corresponding to the recognized location information, the content of the electrical appliance 10 may be changed to reference content or the reference content may be set to the electrical appliance, in step S16. As an example, if the electrical appliance 10 is installed at a specific location but content corresponding to the specific location (such as content corresponding to a language used in the specific location) is not stored in the memory 140, reference content (which is content predetermined as reference content in an electrical appliance) corresponding to Korean or English may be set to the electrical appliance 10 or the content of the electrical appliance 10 may be changed to the reference content.

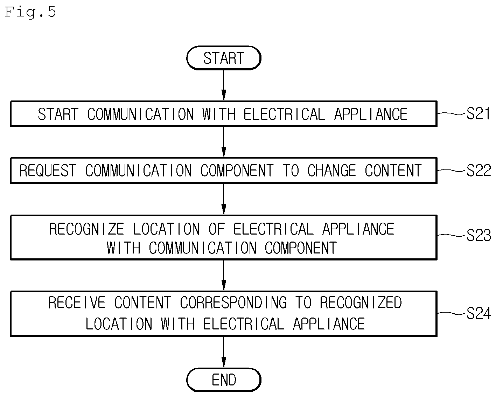

Fig. 5 is a diagram for explaining a method of controlling an electrical appliance according to a third embodiment.

Referring to Fig. 5, the electrical appliance 10 starts communication in step S21. Then, the electrical appliance 10 requests the communication component 20 to change content in step S22. That is, the electrical appliance 10 requests the communication component 20 to recognize a location.

Then, the communication component 20 recognizes information on a fixed IP address (which is basic information required for recognizing an electrical appliance) located for the first time on the access route between the electrical appliance 10 and the communication component 20. In addition, the communication component 20 recognizes the consumer location of the first fixed IP address.

Then, the communication component 20 transmits, to the electrical appliance 10, content corresponding to the installation location of the electrical appliance 10. Then, the content of the electrical content 10 is changed to content received from the communication component, or the content received from the communication component 20 is set to the electrical appliance 10.

The communication component 20 may be a web server or server that is managed by the manufacturer or seller of the electrical appliance 10. In addition, the communication component 20 may include a memory that stores content corresponding to the location of the electrical appliance 10.

According to the embodiment, content corresponding to an installation location does not need to be stored in the memory of the electrical appliance.

As another example, the electrical appliance 10 requests the communication component 20 to recognize a location and the communication component 20 recognizes a fixed IP address located for the first time on the access route between the electrical appliance 10 and the communication component 20 or the IP address of an access point. In addition, the communication component 20 may recognize and then transmit the consumer location of the recognized IP address to the electrical appliance 10. Then, the electrical appliance 10 may set or change content corresponding to a received location.

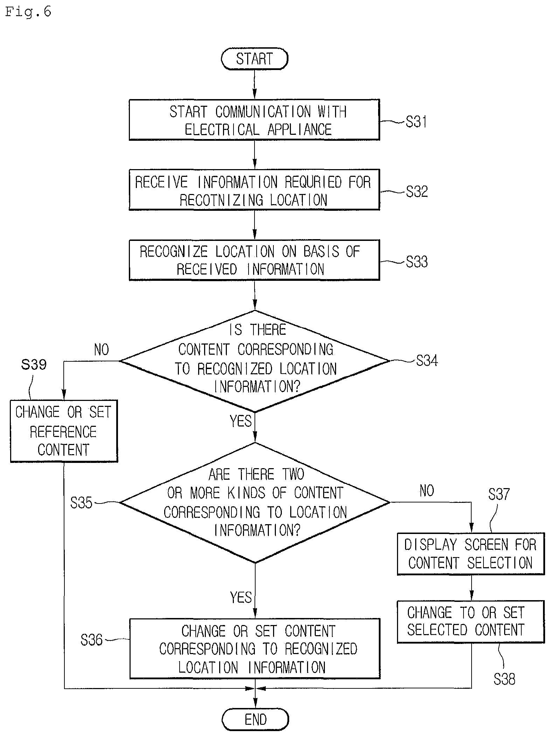

Fig. 6 is a diagram for explaining a method of controlling an electrical appliance according to a fourth embodiment. Referring to Fig. 6, the electrical appliance 10 starts communication in step S31. Then, the electrical appliance 10 receives basic information required for recognizing a location in step S32.

As an example, the electrical appliance 10 may receive, from the communication component, basic information required for recognizing a location. The communication component may be a component of a power company, a web server, or a server of the seller or manufacturer of the electrical appliance. The information required for recognizing a location may be energy information or current time information. The energy information may include information on variable energy charge. The energy charge information may include the unit of a charge.

Next, the electrical appliance 10 recognizes a location on the basis of the energy information or the current time information in step S33. In particular, it is possible to recognize the location of the electrical appliance 10 on the basis of the unit of the charge that is included in the energy information. This is based on that the unit of the charge may vary depending on a country. Alternatively, the electrical appliance may recognize, on the basis of current time information, a location to which the current time is applied. This is based on that the current time may vary depending on a location. The electrical appliance 10 may recognize location-dependent time information by using the communication unit and recognize the current location by comparing the current time information and the location-dependent time information.

Next, the electrical appliance 10 determines whether there is content corresponding to the recognized location in step S34.

If there is content corresponding to the recognized location as a result of determination made in step S34, it is determined whether there are two or more kinds of content corresponding to the location, in step S35.

If the number of kinds of content corresponding to the location is one as a result of determination made in step S35, the content of the electrical appliance 10 is changed to content corresponding to the recognized location or the content corresponding to the recognized location is set to the electrical appliance, in step S36. On the other hand, if there are two or more kinds of content corresponding to the recognized location, a screen for content selection may be displayed on the electrical appliance 10 in step S37.

In a case where a location is recognized on the basis of the energy information or current time information, there may be a plurality of countries where the monetary unit is equal or a plurality of countries where the current time is equal. Thus, in a case where there are two or more kinds of content corresponding to the recognized location, the screen for content selection is displayed on the electrical appliance 10 in the embodiment so that a user selects content that is lastly used. The user may select desired content from the screen for content selection and if specific content is selected, the content of the electrical appliance 10 is changed to the selected content or the electrical appliance is set with the selected content in, step S38.

On the other hand, if there is no content corresponding to the recognized location as a result of determination made in step S34, the content of the electrical appliance 10 is changed to reference content or the electrical appliance is set with the reference content, in step S39. The reference content is described in the second embodiment and thus its detailed description is skipped.

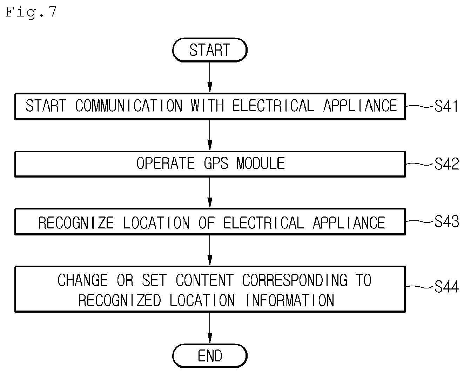

Fig. 7 is a flow chart of a method of controlling an electrical appliance according to a fifth embodiment.

Referring to Fig. 7, the electrical appliance according to the embodiment may include a global positioning system (GPS) module in order to recognize a location.

A method of recognizing the location of the electrical appliance is as follows.

The electrical appliance 10 starts communication in step S41. Then, the GPS module of the electrical appliance 10 operates in step S42. If the GPS module operates, the GPS module receives information on the current coordinate (information required for recognizing a location) from GPS satellites.

Then, the electrical appliance 10 recognizes the current location based on the received information on the current coordinate in step S43. In this case, the electrical appliance 10 may include a memory in which location information depending on coordinate information is stored.

If the electrical appliance 10 recognizes the current location, the content of the electrical appliance 10 is changed to content corresponding to the recognized location or the electrical appliance 10 is set with the content corresponding to the recognized location information, in step S44. In this case, the memory of the electrical appliance 10 may store location-dependent content or language-dependent content.

Although the foregoing embodiments describe that the electrical appliance has the GPS module, the communication component that may communicate with the electrical appliance may have the GPS module, recognize its own location (coordinate information) and transmit, to the electrical appliance, content corresponding to the recognized location information. In this case, the location information of the electrical appliance may be recognized as being equal to the location of the communication component.

The scope of the present invention may include the following embodiments.

Firstly, in a case where the electrical appliance performs Wi-Fi communication, it is possible to recognize the location of the electrical appliance on the basis of the reception sensitivity of a signal transmitted from an access point. In this case, the electrical appliance determines the reception sensitivity of one or more access points (information required for recognizing the location of the electrical appliance) and transmits the determined result to a separate communication component that may communicate with the electrical appliance. Thus, the communication component may recognize the location of the electrical appliance. A signal transmitted from the access point may be, as an example, a beacon signal.

In addition, the location information recognized at the communication component may be transmitted to the electrical appliance. The communication component may calculate the distance between the access point and the electrical appliance based on the reception sensitivity and recognize the location based on the calculated distance.

As another example, the electrical appliance may recognize voice information (required for recognizing the location of the electrical appliance) to recognize location or language information. The electrical appliance may include a voice input unit and a voice analysis unit and recognizes the language information or location information of a user based on the input voice information.

As an example, the electrical appliance recognizes user's language and the content of the electrical appliance may be changed to content corresponding to that language or the electrical appliance may be set with content corresponding to that language. Alternatively, the electrical appliance recognizes location or region information that is included in voice information and the content of the electrical content may be changed to content corresponding to that location or region or the electrical appliance may be set with the content corresponding to that location or region. As an example, if voice information input by a user includes "Korea", the content of the electrical appliance may be changed to content corresponding to Korea or Korean or the electrical appliance may be set with content corresponding to Korea or Korean.

## Claims

1. A method of recognizing an installation location of an electrical appliance (10), the method comprising:
starting (S31) communication by an electrical appliance (10);
recognizing (S32), by the electrical appliance (10), basic information required for recognizing the installation location of the electrical appliance (10); and
recognizing (S33) the installation location of the electrical appliance (10) on a basis of the recognized basic information, and
wherein the electrical appliance (10) receives basic information required for recognizing the installation location from a communication component (20) by using a communication unit (110) and recognizes location information on a basis of the received basic information, and wherein the basic information is energy information,
**characterised**
**in that** the energy information includes information on variable energy charge and includes the unit of charge, and
**in that** the electrical appliance (10) recognizes the location of the electrical appliance (10) on the basis of the unit of the charge.

2. The method according to claim 1, further comprising applying content corresponding to the recognized installation location to the electrical appliance (10), wherein in the applying of content to the electrical appliance (10), content of the electrical appliance (10) is changed (S36) to content corresponding to the recognized installation location or the electrical appliance (10) is set with content corresponding to the recognized installation location.

3. The method according to claim 2, wherein a memory (140) of the electrical appliance (10) stores content corresponding to an installation location.

4. The method according to claim 3, wherein it is determined (S34) whether there is content corresponding to the recognized installation location in the memory (140),
content of the electrical appliance (10) is changed (S36) to content corresponding to the recognized installation location if there is content corresponding to the recognized installation location in the memory (140), and
content of the electrical appliance (10) is changed (S39) to reference content or the electrical appliance (10) is set with the reference content if there is no content corresponding to the recognized installation location in the memory (140).

5. The method according to claim 3, wherein it is determined (S35) whether there is content corresponding to the recognized installation location in the memory (140), and a screen for content selection is displayed (S37) if there are two or more kinds of content corresponding to the recognized installation location in the memory (140).

6. The method according to claim 3, wherein the electrical appliance (10) receives content corresponding to the installation location from the outside.

7. The method according to claim 3, wherein the content is one or more of a mode for performing functions of the electrical appliance (10), a language, a screen configuration, and an icon.

## Patentansprüche

1. Verfahren zum Erkennen eines Installationsorts eines Elektrogeräts (10), das Verfahren umfassend:
Starten (S31) einer Kommunikation durch ein Elektrogerät (10);
Erkennen (S32) grundlegender Informationen durch das Elektrogerät (10), die erforderlich sind zum Erkennen des Installationsorts des Elektrogeräts (10); und
Erkennen (S33) des Installationsorts des Elektrogeräts (10) auf der Basis der erkannten grundlegenden Informationen, und
wobei das Elektrogerät (10) grundlegende Informationen empfängt, die zum Erkennen des Installationsorts von einer Kommunikationskomponente (20) unter Verwendung einer Kommunikationseinheit (110) erforderlich sind, und Standortinformationen auf der Basis der empfangenen grundlegenden Informationen erkennt,
und wobei die grundlegenden Informationen Energieinformationen sind,
**dadurch gekennzeichnet, dass** die Energieinformationen Informationen über variable Stromlast beinhalten und die Lasteinheit beinhalten, und
dass das Elektrogerät (10) den Standort des Elektrogeräts (10) auf der Basis der Einheit der Last erkennt.

2. Verfahren nach Anspruch 1, ferner umfassend das Anwenden von Inhalt entsprechend dem erkannten Installationsort des Elektrogeräts (10), wobei bei dem Anwenden von Inhalt auf das Elektrogerät (10) Inhalt des Elektrogeräts (10) zu Inhalt geändert wird (S36), der dem erkannten Installationsort entspricht, oder das Elektrogerät (10) mit Inhalt eingestellt wird, der dem erkannten Installationsort entspricht.

3. Verfahren nach Anspruch 2, wobei ein Speicher (140) des Elektrogeräts (10) Inhalt entsprechend einem Installationsort speichert.

4. Verfahren nach Anspruch 3, wobei ermittelt wird (S34), ob in dem Speicher (140) Inhalt entsprechend dem erkannten Installationsort vorhanden ist,
Inhalt des Elektrogeräts (10) in Inhalt geändert wird (S36), der dem erkannten Installationsort entspricht, wenn Inhalt vorhanden ist, der dem erkannten Installationsort in dem Speicher (140) entspricht, und
Inhalt des Elektrogeräts (10) in Referenzinhalt geändert wird (S39) oder das Elektrogerät (10) mit dem Referenzinhalt eingestellt wird, wenn kein Inhalt vorhanden ist, der dem erkannten Installationsort in dem Speicher (140) entspricht.

5. Verfahren nach Anspruch 3, wobei ermittelt wird (S35), ob Inhalt vorhanden ist, der dem erkannten Installationsort in dem Speicher (140) entspricht, und ein Bildschirm zur Inhaltsauswahl angezeigt wird (S37), wenn zwei oder mehrere Arten von Inhalt vorhanden sind, die dem erkannten Installationsort in dem Speicher (140) entsprechen.

6. Verfahren nach Anspruch 3, wobei das Elektrogerät (10) von außen Inhalt empfängt, das dem Installationsort entspricht.

7. Verfahren nach Anspruch 3, wobei der Inhalt eines oder mehrere aus einem Modus zum Ausführen von Funktionen des Elektrogeräts (10), einer Sprache, einer Bildschirmkonfiguration und einem Icon ist.

## Revendications

1. Procédé pour reconnaître un emplacement d'installation d'un appareil électrique (10), le procédé comprenant :
démarrer (S31) une communication par un appareil électrique (10) ;
reconnaître (S32), par l'appareil électrique (10), des informations de base nécessaires pour reconnaître l'emplacement d'installation de l'appareil électrique (10) ; et
reconnaître (S33) l'emplacement d'installation de l'appareil électrique (10) sur une base des informations de base reconnues, et
l'appareil électrique (10) recevant des informations de base nécessaires pour reconnaître l'emplacement d'installation à partir d'un composant de communication (20) par utilisation d'une unité de communication (110) et reconnaissant des informations d'emplacement sur la base des informations de base reçues,
les informations de base étant des informations d'énergie,
**caractérisé :**
**par le fait que** les informations d'énergie comprennent des informations relatives à une charge d'énergie variable et comprennent l'unité de charge, et
**par le fait que** l'appareil électrique (10) reconnaît l'emplacement de l'appareil électrique (10) sur la base de l'unité de charge.

2. Procédé selon la revendication 1, comprenant en outre l'application d'un contenu correspondant à l'emplacement d'installation reconnu à l'appareil électrique (10), dans lequel dans l'application d'un contenu à l'appareil électrique (10), un contenu de l'appareil électrique (10) est changé (S36) en un contenu correspondant à l'emplacement d'installation reconnu ou l'appareil électrique (10) est paramétré avec un contenu correspondant à l'emplacement d'installation reconnu.

3. Procédé selon la revendication 2, dans lequel une mémoire (140) de l'appareil électrique (10) stocke un contenu correspondant à un emplacement d'installation.

4. Procédé selon la revendication 3, dans lequel il est déterminé (S34) s'il y a un contenu correspondant à l'emplacement d'installation reconnu dans la mémoire (140),
un contenu de l'appareil électrique (10) est changé (S36) en un contenu correspondant à l'emplacement d'installation reconnu s'il y a un contenu correspondant à l'emplacement d'installation reconnu dans la mémoire (140), et
un contenu de l'appareil électrique (10) est changé (S39) en un contenu de référence ou l'appareil électrique (10) est paramétré avec le contenu de référence s'il n'y a pas de contenu correspondant à l'emplacement d'installation reconnu dans la mémoire (140).

5. Procédé selon la revendication 3, dans lequel il est déterminé (S35) s'il y a un contenu correspondant à l'emplacement d'installation reconnu dans la mémoire (140), et un écran de sélection de contenu est affiché (S37) s'il y a au moins deux types de contenu correspondant à l'emplacement d'installation reconnu dans la mémoire (140).

6. Procédé selon la revendication 3, dans lequel l'appareil électrique (10) reçoit un contenu correspondant à l'emplacement d'installation depuis l'extérieur.

7. Procédé selon la revendication 3, dans lequel le contenu est un ou plusieurs parmi un mode de réalisation de fonctions de l'appareil électrique (10), une langue, une configuration d'écran et une icône.
